# EUROPÄISCHE PATENTSCHRIFT

(11) **EP 0 560 363 B1**
(45) Veröffentlichungstag und Bekanntmachung des Hinweises auf die Patenterteilung: **01.07.1998**
(21) Anmeldenummer: 93103949.9
(22) Anmeldetag: 11.03.1993
(51) Int. Cl.: C07F 7/12

(54) **Verfahren zur Herstellung von Dimethylchlorsilan**
Process for the preparation of dimethylchlorosilane
Procédé de préparation de dimethylchlorosilane

(30) Priorität: 13.03.1992 DE 4208152
(43) Veröffentlichungstag der Anmeldung: 15.09.1993
(73) Patentinhaber: WACKER-CHEMIE GMBH, D-81737 München (DE)
(72) Erfinder: Geisberger, Gilbert, Dr., W-8262 Altötting (DE); Pachaly, Bernd, Dr., W-8263 Burghausen (DE)

(56) Entgegenhaltungen:
- EP-A- 0 138 669
- EP-A- 0 138 670
- EP-A- 0 141 702
- EP-A- 0 206 621
- EP-A- 0 286 074
- FR-A- 1 457 139
- US-A- 2 834 648
- US-A- 3 769 310
- US-A- 4 113 845
- US-A- 4 701 430
- CHEMICAL ABSTRACTS, vol. 112, 1990, Columbus, Ohio, US; abstract no. 158634a, SHINOHARA, N. ET AL. Seite 754 ;
- CHEMICAL ABSTRACTS, vol. 110, 1989, Columbus, Ohio, US; abstract no. 102628t, INOUE, K. ET AL. Seite 492 ;

## Beschreibung

Die Erfindung betrifft ein Verfahren zur Herstellung von Dimethylchlorsilan durch Komproportionierung von Dimethyldichlorsilan mit mindestens einem Silan mit Si-gebundenen Methylgruppen, Wasserstoff- und/oder Chloratomen in Gegenwart eines Katalysators.

Bei der sogenannten Direktsynthese, einem Verfahren, bei dem Siliciumpulver mit Methylchlorid in Gegenwart eines Kupferkatalysators umgesetzt wird, fallen neben dem Hauptprodukt Dimethyldichlorsilan auch weitere Silane an. Beispielsweise wird Dimethylchlorsilan aber nur in geringen Ausbeuten erhalten.

Die Komproportionierung zweier Silane mit Si-gebundenen Methylgruppen, Wasserstoff- und/oder Chloratomen in Gegenwart von quaternären Ammoniumsalzen ist aus K. Moedritzer et al., Journal of Organometallic Chemistry 12 (1968) 69-77 bekannt.

Gemäß US-A 3,399,222 (ausgegeben 27. August 1968, D.R. Weyenberg et al., Dow Corning Corporation) liegt bei der Komproportionierung von Dimethyldichlorsilan mit Methyldichlorsilan in Gegenwart von quaternären Ammoniumsalzen das folgende Gleichgewicht auf der linken Seite:

In US-A 4,870,200 (ausgegeben 26. September 1989, R. Ottlinger et al., Wacker-Chemie GmbH) ist die Disproportionierung von Methyldichlorsilan zu Methylchlorsilan und/oder Methylsilan in Gegenwart eines Katalysators, bestehend aus einem im Reaktionsmedium unlöslichen Träger, auf dem tertiäre Amingruppen oder quaternäre Ammoniumgruppen kovalent gebunden sind, beschrieben.

Ein Verfahren zur Herstellung von Dimethylchlorsilan aus Tetramethyldisiloxan is bekannt aus Chemical Abstracts Bd. 112, No. 158634 2

Es bestand die Aufgabe, ein Verfahren zur Herstellung von Dimethylchlorsilan durch Komproportionierung von Dimethyldichlorsilan mit mindestens einem Silan mit Si-gebundenen Methylgruppen, Wasserstoff- und/oder Chloratomen in Gegenwart eines Katalysators bereitzustellen, bei dem gute Ausbeuten an Dimethylchlorsilan erhalten werden, bei dem die Komproportionierung unter heterogener Katalyse erfolgt, der Katalysator leicht aus der Reaktionsmischung abgetrennt und rückgewonnen werden kann und die kontinuierliche Verfahrensweise möglich ist.

Gegenstand der Erfindung ist ein Verfahren zur Herstellung von Dimethylchlorsilan durch Komproportionierung von Dimethyldichlorsilan mit mindestens einem Silan mit Si-gebundenen Methylgruppen, Wasserstoff- und/oder Chloratomen in Gegenwart eines Katalysators, dadurch gekennzeichnet, daß als Silan Methylchlorsilan und/oder Methylsilan und als Katalysator ein im Reaktionsmedium unlöslicher Träger, auf dem NR₂R¹-Gruppen oder ^{⊖}X^{⊕}NR₃R¹-Gruppen kovalent gebunden sind,
wobei R gleich oder verschieden ist, ein Wasserstoffatom oder einen einwertigen Kohlenwasserstoffrest mit 1 bis 20 Kohlenstoffatomen je Rest bedeutet oder zwei Reste R zusammen einen zweiwertigen Kohlenwasserstoffrest mit 4 bis 11 Kohlenstoffatomen, der gegebenenfalls durch ein Heteroatom unterbrochen ist, bedeuten,
R¹ einen zweiwertigen Kohlenwasserstoffrest mit 1 bis 20 Kohlenstoffatomen je Rest und
X⁻ Chloridion, Bromidion oder Jodidion bedeutet,
eingesetzt wird.

Das erfindungsgemäße Verfahren hat den Vorteil, daß bei der Komproportionierung ein Austausch von Si-gebundenen Chloratomen und Wasserstoffatomen, aber kein Austausch von Si-gebundenen Methylgruppen erfolgt.

Bevorzugt werden als Methylchlorsilan und/oder Methylsilan die Disproportionierungsprodukte von Methyldichlorsilan eingesetzt, die bei der Disproportionierung von Methyldichlorsilan in Gegenwart von einem im Reaktionsmedium unlöslichen Träger, auf dem NR₂R¹-Gruppen oder ^{⊖}X^{⊕}NR₃R¹-Gruppen kovalent gebunden sind, wobei R, R¹ und X⁻ die oben dafür angegebene Bedeutung haben, erhalten werden.

Beispiele für Reste R sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Tetradecylreste; Hexadecylreste und Octadecylreste, wie der n-Octadecylrest; Cycloalkylreste, wie Cyclopentyl-, Cyclohexyl-, Cycloheptylreste und Methylcyclohexylreste; Arylreste, wie der Phenylrest; Alkarylreste, wie o-, m-, p-Tolylreste; Xylylreste und Ethylphenylreste und Aralkylreste, wie der Benzylrest, der α- und der β-Phenylethylrest.

Beispiele für Reste, bei denen die beiden Reste R zusammen einen zweiwertigen Kohlenwasserstoffrest darstellen sind solche der Formel -(CH₂)₅- und -(CH₂)₄-.

Beispiele für Reste, bei denen die beiden Reste R zusammen einen zweiwertigen Kohlenwasserstoffrest, der durch ein Heteroatom unterbrochen ist, darstellen, sind solche der Formel -(CH₂)₂-O-(CH₂)₂- und -(CH₂)₂-O-(CH₂)₂-O-(CH₂)₂-.

Bevorzugte Beispiele für R sind Alkylreste, wobei wegen der leichten Zugänglichkeit der Methylrest besonders bevorzugt ist.

Beispiele für Reste R¹ sind Alkylenreste, wie der Methylen-, Ethylen-, n-Propylen-, iso-Propylen-, n-Butylen-, iso-Butylen-, n-Pentylen-, iso-Pentylen-; Hexylenreste, wie der n-Hexylenrest; Heptylenreste, wie der n-Heptylenrest; Octylenreste, wie der n-Octylenrest und iso-Octylenreste; Nonylenreste, wie der n-Nonylenrest; Decylenreste, wie der n-Decylenrest; Dodecylenreste, wie der n-Dodecylenrest; Tetradecylenreste; Hexadecylenreste und Octadecylenreste, wie der n-Octadecylenrest; Cycloalkylenreste, wie Cyclopentylen-, Cyclohexylen- und Cycloheptylenreste; Arylenreste, wie der Phenylenrest; Alkarylenreste, wie Tolylenreste und Aralkylenreste, wie der Benzylenrest.

Bevorzugte Beispiele für Reste R¹ sind Alkylenreste, wobei der n-Propylenrest besonders bevorzugt ist.

Als Halogenidion X⁻ ist das Chloridion bevorzugt.

Bevorzugte im Reaktionsmedium unlösliche Träger bestehen aus Stoffen mit Hydroxylgruppen an der Oberfläche. Beispiele für solche Stoffe sind saure Tone, wie Tonsil, Montmorillonit und sonstige Alumosilikate in der H⁺-Form, Zeolithe, poröses Glas, wie Controlled Pore Glass, poröse Keramik, wie Controlled Pore Ceramics, poröses Siliciumdioxid, wie gefällte oder pyrogene Kieselsäure, poröses Aluminiumoxid und poröses Mullit.

Weitere bevorzugte Beispiele für im Reaktionsmedium unlösliche Träger sind getrocknete Hydrolysate von funktionellen Silanen oder Polystyrole, wie mit Divinylbenzol vernetztes Polystyrol.

Besonders bevorzugt finden poröses Siliciumdioxid oder mit Divinylbenzol vernetztes Polystyrol als Träger Verwendung.

Die kovalente Bindung der NR₂R¹- oder ^{⊖}X^{⊕}NR₃R¹-Gruppen auf dem Träger erfolgt bei den Stoffen mit Hydroxylgruppen an der Oberfläche vorzugsweise durch Reaktion dieser Hydroxylgruppen mit den hydrolysierbaren Gruppen Y der Verbindungen der Formel

Y₃₋ₓR²ₓSi(CH₂)ₙZ (I)

worin Y eine hydrolysierbare Gruppe,
R² einen einwertigen Kohlenwasserstoffrest mit 1 bis 12 Kohlenstoffatomen je Rest,
n eine ganze Zahl von 1 bis 20,
x 0 oder 1 und
Z eine NR₂- oder ^{⊖} X^{⊕}NR₃-Gruppe bedeutet, wobei R die oben angegebene Bedeutung hat,
   vorzugsweise in einem inerten Lösungsmittel bei Temperaturen im Bereich von vorzugsweise 0 bis 200°C.

Beispiele für hydrolysierbare Gruppen Y sind Alkoxyreste, wie der Methoxy- oder Ethoxyrest, und Halogenatome wie das Chloratom.

Beispiele für Reste R² sind Alkylreste, wie der Methyl-, Ethyl-, n-Propyl-, iso-Propyl-, n-Butyl-, iso-Butylrest; Arylreste, wie der Phenylrest; und Alkarylreste, wie o-, m-, p-Tolylreste.

Insbesondere wegen der leichten Zugänglichkeit sind als Rest R² der Methylrest und für n die Werte 2 oder 3, also der Ethylen- oder Propylenrest, bevorzugt.

Beispiele für bevorzugte Verbindungen der Formel

Y₃₋ₓR²ₓSi(CH₂)ₙZ (I)

sind 3-Aminopropyltrimethoxysilan, 3-Aminopropyltriethoxysilan, 2-Aminoethyltrimethoxysilan, 2-Aminoethyltriethoxysilan und 3-Aminopropyltrichlorsilan.

Insbesondere finden N,N-Diethylaminopropyltrimethoxysilan, Morpholinopropyltriethoxysilan, Trimethoxysilyl-3-propyl-N,N,N-dimethyloctylammoniumchlorid und Trimethoxysilyl-3-propyl-N,N,N-dimethyloctadecylammoniumchlorid Verwendung.

Vorzugsweise werden 5-30 Gew.-%, insbesondere 10-20 Gew.-%, Verbindungen der Formel (I), bezogen auf das Gewicht des unbehandelten Trägers, eingesetzt.

Vorzugsweise wird eine 40 bis 60 %ige Lösung der Verbindung der Formel (I) in Alkohol, wie Methanol, bezogen auf das Gewicht der Verbindung der Formel (I), eingesetzt.

Beispiele für inerte Lösungsmittel sind Toluol, Xylol und Chlorbenzol.

Der bei der Reaktion so erhaltene Katalysator wird vorzugsweise abfiltriert und vorzugsweise bei einer Temperatur von 50 bis 100°C getrocknet.

Die kovalente Bindung der NR₂R¹-Gruppen oder ^{⊖}X^{⊕}NR₃R¹-Gruppen auf dem Träger erfolgt bei den getrockneten Hydrolysaten von funktionellen Silanen während der Herstellung der Hydrolysate, die nach bekannten Verfahren herstellbar sind, vergleiche K.G. Allum et al., J. Organometal. Chem. 87, 203 (1975).

Als funktionelle Silane werden vorzugsweise Verbindungen der Formel (I), wie (EtO)₃SiCH₂CH₂CH₂NEt₂,
(MeO)₃SiCH₂CH₂CH₂NMe₂C₁₈H₃₇^{⊕}Cl^{⊖},
(MeO)₃SiCH₂CH₂CH₂NMe₂C₁₀H₂₁^{⊕}Cl^{⊖} oder
(MeO)₃SiCH₂CH₂CH₂NMe₃^{⊕}Cl^{⊖},
wobei Me einen Methylrest und Et einen Ethylrest bedeutet, eingesetzt.

Zur Modifizierung der Hydrolysate kann die Hydrolyse auch in Gegenwart von weiteren Verbindungen wie Wasserglas, Titanhalogeniden oder Titanalkoholaten, Zirkonhalogeniden oder Zirkonalkoholaten, Aluminiumhalogeniden oder Aluminiumalkoholaten, Siliciumhalogeniden oder Siliciumalkoholaten, und Zinnhalogeniden oder Zinnalkoholaten durchgeführt werden.

Beispiele für die bei der Herstellung der Hydrolysate eingesetzten Verbindungen sind
Si(OEt)₄ und (EtO)₃SiCH₂CH₂CH₂NEt₂;
Ti(OBu)₄ und (MeO)₃SiCH₂CH₂CH₂NMe₂C₁₈H₃₇^{⊕}Cl^{⊖};
Na₂SiO₃ und (MeO)₃SiCH₂CH₂CH₂NMe₂C₁₀H₂₁^{⊕}Cl^{⊖};
Al(O-i-Pr)₃ und (MeO)₃SiCH₂CH₂CH₂NMe₃^{⊕}Cl^{⊖},
wobei Me einen Methylrest, Et einen Ethylrest, i-Pr einen iso-Propylrest und Bu einen n-Butylrest bedeutet.

Polystyrole wie z.B. mit Divinylbenzol vernetztes Polystyrol mit kovalent gebundenen NR₂R¹-Gruppen oder ^{⊖}X^{⊕}NR₃R¹-Gruppen sind als basische Ionenaustauscher bekannt und kommerziell erhältlich. Beispiele für bevorzugte basische Ionenaustauscher sind Amberlite IRA 93, Amberlyst A21 (beide Rohm und Haas GmbH, Frankfurt BRD), Lewatit 35A, Lewatit MP64, Lewatit MP65, Lewatit MP62 (alle Bayer AG, Leverkusen, BRD).

Vorzugsweise liegen die Träger mit kovalent gebundenen NR₂R¹-Gruppen oder ^{⊖}X^{⊕}-NR₃R¹-Gruppen als Pulver mit einer mittleren Korngrößenverteilung von vorzugsweise 1µm bis 1mm, bevorzugt 0,5 bis 1 mm, vor bzw. sind vor oder nach der kovalenten Bindung der NR₂R¹-Gruppen oder ^{⊖}X^{⊕}NR₃R¹-Gruppen auf dem Träger in an sich bekannter Weise in Formkörper wie Ringe, Halbringe, Stäbchen, Kugeln, Würfel oder Sättel überführt worden. Bevorzugte Formkörper haben die Form von Ringen, Kugeln oder Würfeln.

Die Formkörper werden aus feinverteiltem Katalysator mit einer mittleren Korngrößenverteilung von 1 µm bis 1 mm geformt, gegebenenfalls unter Zugabe von organischen oder anorganischen Bindern oder unter vernetzender Hydrolyse. Die Formgebung kann mittels Verpressen bei erhöhter Temperatur oder mittels Sintern bei erhöhtem Druck, aber auch mittels eines Extruders und anschließendem Zerkleinern der Profile erfolgen.

Beispiele für organische oder anorganische Binder sind Epoxydharze, Wasserglas, organische Polymere, wie Polyethylen, Polypropylen, Polystyrol, Polyvinylchlorid, Polyacrylat und Polyamid.

Zur Erhöhung der Porosität der geformten Katalysatoren wird den Massen vor der Formgebung vorzugsweise eine wasserlösliche Substanz, wie Natriumchlorid oder Natriumsulfat zugesetzt, welche nach dem Formgebungsschritt herausgelöst wird und somit eine hochaktive Makroporosität ergibt.

Vorzugsweise wird das bei dem erfindungsgemäßen Verfahren eingesetzte Methylchlorsilan und/oder Methylsilan durch Disproportionierung von Methyldichlorsilan in Gegenwart eines Katalysators hergestellt. Beispiele für Katalysatoren sind tertiäre Amine und quaternäre Ammoniumsalze, wie Tetrabutylammoniumchlorid.

Bevorzugt wird das bei dem erfindungsgemäßen Verfahren eingesetzte Methylchlorsilan und/oder Methylsilan durch Disproportionierung von Methyldichlorsilan, wie in US-A 4,870,200 beschrieben, hergestellt.

Methyldichlorsilan fällt bei der sogenannten Direktsynthese neben dem Hauptprodukt Dimethyldichlorsilan an.

Methylchlorsilan und Methylsilan kann auch nach anderen Verfahren hergestellt werden.

Das bei dem erfindungsgemäßen Verfahren eingesetzte Methylsilan kann beispielsweise aus Methylhydrogensiloxanen nach dem in E.L. Zicky, J. Organometal. Chem. 4, 411-412 (1965) beschriebenen Verfahren oder durch Hydrierung von Methylchlorsilanen mit Metallhydriden gemäß W. Noll, Chemie und Technologie der Silicone, Verlag Chemie, Weinheim, 2. Auflage, Seiten 76 bis 77, 1968, hergestellt werden.

Das erfindungsgemäße Verfahren wird in heterogener Phase durchgeführt.

Die Edukte Dimethyldichlorsilan sowie Methylchlorsilan und/oder Methylsilan werden vorzugsweise gasförmig eingesetzt, können aber auch in flüssiger Form oder gelöst in einem inerten organischen Lösungsmittel, wie Hexan, Toluol, Xylol oder Chlorbenzol, eingesetzt werden.

Bei der Reaktion in der Flüssigphase wird eine Suspension, bestehend aus dem feinverteiten Katalysator und den Edukten Dimethyldichlorsilan sowie Methylchlorsilan und/oder Methylsilan, bei einer Temperatur von vorzugsweise 0 bis 250°C und einem Druck von vorzugsweise 0,1 bis 20 bar erhitzt und das erhaltene Reaktionsgemisch wird durch fraktionierte Destillation aufgetrennt.

Bei der Reaktion in der Gasphase wird der feste Katalysator vorzugsweise in feinverteilter Form in einem Fest- oder Wirbelbett eingesetzt. Wird der feste Katalysator als Formkörper in einer Rektifikationskolonne eingesetzt, kann die Reaktion sowohl in der Gas- als auch in der Flüssigphase stattfinden.

Bei der Anordnung des Katalysators in einem Fest- oder Wirbelbett wird gasförmiges Methylchlorsilan und/oder Methylsilan mit gasförmigem Dimethyldichlorsilan bei einem Druck von vorzugsweise 0,1 bis 15 bar, bevorzugt 1 bis 7 bar, und einer Temperatur von vorzugsweise 0 bis 300°C, bevorzugt 0 bis 150°C, durch ein Fest- oder Wirbelbett, bestehend aus feinverteiltem Katalysator geleitet, das erhaltene Reaktionsgemisch kondensiert, durch fraktionierte Destillation aufgetrennt und so das Dimethylchlorsilan erhalten. Vorzugsweise wird dabei das in einer Rektifikationskolonne bei der Disproportionierung des Methyldichlorsilans anfallende Kopfprodukt Methylsilan, Methylchlorsilan oder ein Gemisch aus Methylsilan und Methylchlorsilan, wie in US-A 4,870,200 beschrieben, eingesetzt.

Bei der Anordnung des Katalysators als Formkörper in einer Rektifikationskolonne wird Methylchlorsilan und/oder Methylsilan in den unteren Teil und Dimethyldichlorsilan in den oberen Teil der Rektifikationskolonne bei einem Druck von vorzugsweise 0,1 bis 20 bar, bevorzugt 3 bis 8 bar, und einer Temperatur von vorzugsweise 0 bis 250 °C, bevorzugt 50 bis 150°C, geleitet. Das am Kolonnenkopf erhaltene Reaktionsgemisch wird anschließend durch fraktionierte Destillation aufgetrennt.

Die bevorzugte Ausführungsform des erfindungsgemäßen Verfahrens besteht darin, sowohl die Disproportionierung des Methyldichlorsilans als auch die Komproportionierung in einer mit Katalysator befüllten Rektifikationskolonne durchzuführen, so daß keine Isolierung oder Zwischenlagerung des Methylsilans und/oder Methylchlorsilans notwendig ist. Das Methyldichlorsilan wird in den unteren Teil der Kolonne aufgegeben. Im unteren Teil der Kolonne findet dabei die Disproportionierung vorzugsweise bei einer Temperatur von -10 bis 250°C und einem Druck von 0,1 bis 15 bar statt, das höhersiedende Methyltrichlorsilan sammelt sich im Sumpf und wird dort entnommen, die zum Kolonnenkopf strebenden Leichtsieder Methylchlorsilan und/oder Methylsilan komproportionieren mit dem in den oberen Kolonnenteil aufgegebenen gasförmigen Dimethyldichlorsilan vorzugsweise bei einer Temperatur von -10 bis 250°C und einem Druck von 0,1 bis 15 bar. Die am Kolonnenkopf austretenden Reaktionsprodukte werden in einer zweiten Rektifikationskolonne aufgegeben. Die am Kolonnenkopf der zweiten Rektifikationskolonne austretenden Leichtsieder Methylsilan, Methylchlorsilan und Dimethylsilan werden kondensiert und in die erste Reaktionskolonne zurückgeführt; die höhersiedenden Reaktionsprodukte werden dem Sumpf entnommen. Die höhersiedenden Reaktionsprodukte werden destillativ aufgetrennt und das Dimethylchlorsilan wird dabei erhalten.

Das erfindungsgemäße Verfahren kann absatzweise, halbkontinuierlich oder vollkontinuierlich durchgeführt werden. Vorzugsweise wird es vollkontinuierlich durchgeführt.

Dimethylchlorsilan ist eine wertvolle Ausgangsverbindung zur Herstellung von funktionellen Silanen oder Siloxanen über die Hydrosilylierung von aliphatische Doppel- oder Dreifachbindung aufweisenden organischen Verbindungen und zur Herstellung von Dimethylhydrogensilylgruppen aufweisenden Organopolysiloxanen, die bei additionsvernetzenden Siliconkautschukzusammensetzungen verwendet werden.

Auch das als Nebenprodukt, hauptsächlich bei der Disproportionierung von Methyldichlorsilan, anfallende Methyltrichlorsilan kann auf wirtschaftliche Weise verwertet werden, beispielsweise zur Herstellung von Methylsiliconharzen und zur Herstellung von durch Flammenhydrolyse erzeugter hochdisperser Kieselsäure.

### Beispiel 1:

### Herstellung des Katalysators:

Hochdisperse Kieselsäure in Kugelform vom Durchmesser 3 - 5 mm, KC-Siliperl AF 125 (Kali-Chemie, Hannover, BRD), wurde mit einer 50 %igen Lösung von 3-Trimethoxysilylpropyloctadecyldimethyl-ammoniumchlorid in Methanol versetzt und mehrere Stunden in Toluol-Rückfluß gekocht. Anschließend wurde von den Solventien abfiltriert und der nunmehr funktionalisierte Träger bei 100°C im Vakuum getrocknet.

### Beispiele 2 bis 5:

Der nach Beispiel 1 hergestellte Katalysator wurde in ein thermostatisiertes Rohr von 2,4 cm Durchmesser in einer Schütthöhe von 20 cm eingefüllt. Die durchgeleiteten Silan-Mengen und -Zusammensetzungen wurden variiert (Beispiele 2-5) und die Produktzusammensetzungen ¹H-NMR-spektroskopisch bestimmt. Die Versuchsbedingungen und Ergebnisse sind in der folgenden Tabelle zusammengefaßt.

Das in den Beispielen 2 bis 4 verwendete MeSiH₃ wurde nach dem in US-A 4,870,200, Beispiel 3, beschriebenen Verfahren hergestellt.

Das in Beispiel 5 verwendete MeSiH₂Cl wurde folgendermaßen hergestellt.

Eine homogene Lösung von 90 g Tetrabutylammoniumchlorid in 1380 g Methyldichlorsilan wurde in einem 2 l-Dreihalskolben mit aufgesetzter Füllkörperkolonne, auf -30°C gekühltem Kolonnenkopf und Rückflußteiler zum Sieden erhitzt. Bei einer Kopftemperatur von 8°C und einer Sumpftemperatur, die im Laufe der Reaktion von 44 auf 50°C stieg, wurden in drei Stunden 150 g Methylchlorsilan als Destillat in der auf -30°C gekühlten Vorlage erhalten.

**Tabelle:**

| | Beispiele | | | |
|---|---|---|---|---|
| | 2 | 3 | 4 | 5 |
| Edukte (Mol-%) | | | | |
| MeSiH₃ | 52,9 | 38,6 | 22,5 | - |
| MeSiH₂Cl | - | - | - | 50,0 |
| Me₂SiCl₂ | 47,1 | 61,4 | 77,5 | 50,0 |
| Kat.-Temp. (°C) | 100 | 100 | 100 | 80 |
| Druck Abs. (bar) | 1 | 1 | 1 | 1 |
| Verweilzeit (sec.) | 61 | 42 | 51 | 60 |

| Produktzusammensetzung (Mol-%) | | | | |
|---|---|---|---|---|
| MeSiH₃ | 27,3 | 4,3 | 3,0 | 7,2 |
| MeSiH₂Cl | 19,5 | 23,2 | 10,0 | 23,3 |
| MeSiHCl₂ | 6,0 | 10,4 | 9,1 | 18,5 |
| MeSiCl₃ | 0,1 | 0,7 | 0,5 | 1,0 |
| Me₂SiH₂ | 2,5 | 2,8 | 1,3 | 0,4 |
| Me₂SiHCl | 27,5 | 34,6 | 28,5 | 13,4 |
| Me₂SiCl₂ | 17,1 | 23,9 | 47,7 | 36,2 |

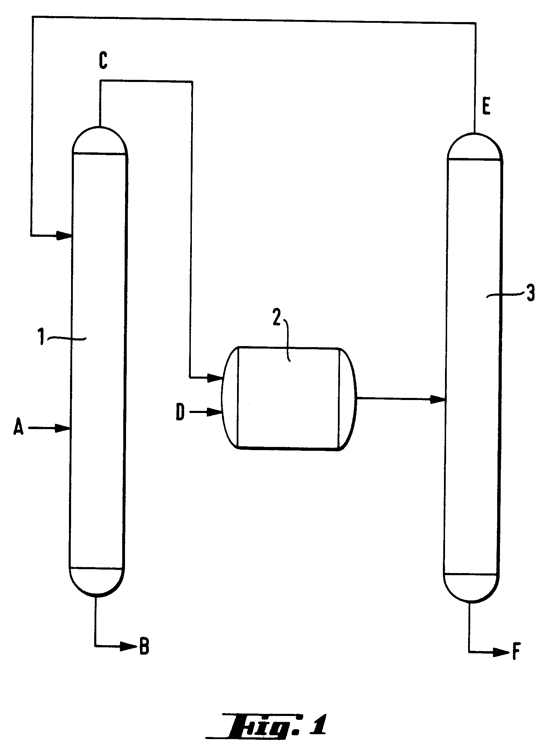

### Beispiel 6 (siehe Figur 1):

In einer Versuchsanlage 1 aus V4A-Stahl, welche in den wesentlichen Teilen aus einer regelbaren Dosierpumpe, einem Verdampfer, einer Füllkörperkolonne mit 2,5 m Gesamtlänge und 50 mm Innendurchmesser, einem Kolonnenkopf mit Kühler, einer Destillationsblase mit 5 l Inhalt sowie einer Vorrichtung zur Druckkonstanthaltung und Entleerung des Sumpfes bestand, wurden aus einem Vorratsgefäß mittels einer Dosierpumpe 1000 g/h Methyldichlorsilan A, das in einem Verdampfer kontinuierlich verdampft wurde, bei einem Absolutdruck von 6 bar in den unteren Kolonnenteil zugeführt.

Das in die mit Katalysator, dessen Herstellung in Beispiel 1 beschrieben ist, befüllte Kolonne eintretende, auf 95°C vorgeheizte Methyldichlorsilan disproportionierte, wobei sich das entstehende Reaktionsgemisch gleichzeitig auftrennte. Das gebildete höhersiedende Methyltrichlorsilan B sammelte sich im Sumpf, aus dem es in einer Menge von 870 g/h in einen Vorratsbehälter ausgetragen wurde. Die Leichtsieder gingen in der Kolonne unter weiterer Reaktion nach oben. Die Temperaturen in der Kolonne betrugen im Sumpf 135°C und am Kopf 10°C. Das gebildete Dampfgemisch C wurde am Kolonnenkopf abgezogen und zusammen mit 1500 g/h Dimethyldichlorsilan D bei Atmosphärendruck durch ein mit Katalysator, dessen Herstellung in Beispiel 1 beschrieben ist, befülltes, auf 100°C thermostatisiertes Rohr 2 von 20 cm Durchmesser und 2 m Länge geleitet; das gasförmige Reaktionsprodukt wurde mittels eines Kühlers kondensiert und bei Atmosphärendruck in der Mitte einer Rektifikationskolonne 3, welche von den Dimensionen her der ersten entsprach, jedoch mit V4A-Metallwendeln von 5 mm Durchmesser befüllt war, eingeleitet. Die Leichtsieder Methylsilan, Dimethylsilan und Methylchlorsilan E wurden am Kolonnenkopf abgenommen und der ersten Reaktionskolonne 1 zugeführt. Dem Sumpf wurden kontinuierlich 1630 g/h eines Silan-Gemisches F folgender Zusammensetzung entnommen:
- 35 Gew.-%: Dimethylchlorsilan
- 44 Gew.-%: Dimethyldichlorsilan
- 19 Gew.-%: Methyldichlorsilan
- 2 Gew.-%: Methyltrichlorsilan

Zur Auftrennung der Silane wurde das Gemisch destillativ aufgearbeitet.

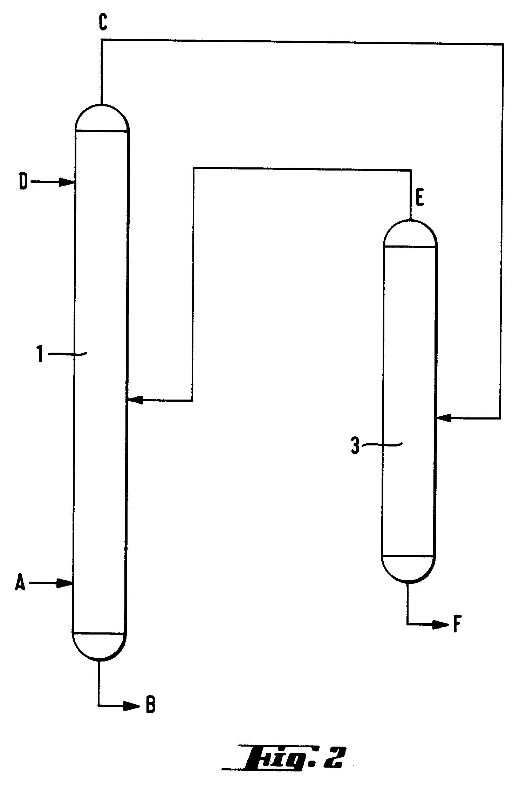

### Beispiel 7 (siehe Figur 2):

Bei einer Füllkörperkolonne 1 mit 4,0 m Gesamtlänge und 50 mm Innendurchmesser entspricht die untere Hälfte des Kolonnenaufbaus der im Beispiel 6 beschriebenen Reaktionskolonne. Die Kolonne wurde in ihrer gesamten Länge mit Katalysator, dessen Herstellung in Beispiel 1 beschrieben ist, befüllt. Die Dosierung von Methyldichlorsilan A und Abnahme des Sumpfes B (1100 g/h bestehend aus 80 Gew.-% Methyltrichlorsilan und 20 Gew.-% Dimethyldichlorsilan) wurde wie in Beispiel 6 beschrieben durchgeführt. Der Absolutdruck betrug 4 bar, die Sumpftemperatur 120°C. Die obere Hälfte der Kolonne wurde durch Begleitheizungen auf 100°C gehalten und in diesem Bereich 1000 g/h auf 100°C erhitztes Dimethyldichlorsilan D zugeführt. Die durch die Disproportionierung des Methyldichlorsilans in der Kolonne nach oben steigenden Leichtsieder Methylsilan und Methylchlorsilan reagieren in der oberen beheizten Zone mit dem dort eingespeisten Dimethyldichlorsilan D. Die Reaktionsprodukte C wurden am Kolonnenkopf (Temperatur 80°C) mittels Kühlung kondensiert und verließen die Destillationsanlage. Wie in Beispiel 6 beschrieben, wurden in der Rektifikationskolonne 3 die Leichtsieder E abgetrennt und in die Druckdestillationsanlage 1 zurückgeführt. Dem Sumpf der Kolonne 2 wurden kontinuierlich 900 g/h eines Silan-Gemisches F, welches 64 Gew.-% Dimethylchlorsilan (Sdp. 35°C; Ausbeute 78 %, bezogen auf eingesetzes Dimethyldichlorsilan) und 34 Gew.-% Methyldichlorsilan (Sdp. 41°C) enthielt, abgezogen. Dieses Gemisch wurde in einer nachgeschalteten Rektifikationskolonne aufgetrennt.

## Patentansprüche

1. Verfahren zur Herstellung von Dimethylchlorsilan durch Komproportionierung von Dimethyldichlorsilan mit mindestens einem Silan mit Si-gebundenen Methylgruppen, Wasserstoff- und/oder Chloratomen in Gegenwart eines Katalysators, dadurch gekennzeichnet, daß als Silan Methylchlorsilan und/oder Methylsilan und als Katalysator ein in dem Reaktionsmedium unlöslicher Träger, auf dem NR₂R¹-Gruppen oder ^{⊖}X^{⊕}NR₃R¹-Gruppen kovalent gebunden sind,
wobei R gleich oder verschieden ist, ein Wasserstoffatom oder einen einwertigen Kohlenwasserstoffrest mit 1 bis 20 Kohlenstoffatomen je Rest bedeutet oder zwei Reste R zusammen einen zweiwertigen Kohlenwasserstoffrest mit 4 bis 11 Kohlenstoffatomen, der gegebenenfalls durch ein Heteroatom unterbrochen ist, bedeuten,
R¹ einen zweiwertigen Kohlenwasserstoffrest mit 1 bis 20 Kohlenstoffatomen je Rest und
X⁻ Chloridion, Bromidion oder Jodidion bedeutet, eingesetzt wird.

2. Verfahren nach Anspruch 1, dadurch gekennzeichnet, daß als Methylchlorsilan und/oder Methylsilan die Disproportionierungsprodukte von Methyldichlorsilan eingesetzt werden, die durch Disproportionierung von Methyldichlorsilan in Gegenwart von einem im Reaktionsmedium unlöslichen Träger, auf dem NR₂R¹-Gruppen oder ^{⊖}X^{⊕}NR₃R¹-Gruppen kovalent gebunden sind, wobei R gleich oder verschieden ist, ein Wasserstoffatom oder einen einwertigen Kohlenwasserstoffrest mit 1 bis 20 Kohlenstoffatomen je Rest bedeutet oder zwei Reste R zusammen einen zweiwertigen Kohlenwasserstoffrest mit 4 bis 11 Kohlenstoffatomen, der gegebenenfalls durch ein Heteroatom unterbrochen ist, bedeuten,
R¹ einen zweiwertigen Kohlenwasserstoffrest mit 1 bis 20 Kohlenstoffatomen je Rest und
X⁻ Chloridion, Bromidion oder Jodidion bedeutet, erhalten werden.

## Claims

1. Process for the preparation of dimethylchlorosilane by comproportionation of dimethyldichlorosilane with at least one silane having Si-bonded methyl groups, hydrogen atoms and/or chlorine atoms in the presence of a catalyst, characterized in that the silane used is methylchlorosilane and/or methylsilane and the catalyst used is a support which is insoluble in the reaction medium and to which NR₂R¹ groups or ^{⊖}X^{⊕}NR₃R¹ groups are covalently bonded, where the Rs are identical or different and denote a hydrogen atom or a monovalent hydrocarbon radical having 1 to 20 carbon atoms per radical, or two radicals R together denote a divalent hydrocarbon radical having 4 to 11 carbon atoms, which is optionally interrupted by a hetero atom,
R¹ denotes a divalent hydrocarbon radical having 1 to 20 carbon atoms per radical and
X⁻ denotes a chloride ion, bromide ion or iodide ion.

2. Process according to Claim 1, characterized in that the methylchlorosilane and/or methylsilane used are the disproportionation products of methyldichlorosilane which are obtained by disproportionation of methyldichlorosilane in the presence of a support which is insoluble in the reaction medium and to which NR₂R¹ groups or ^{⊖}X^{⊕}NR₃R¹ groups are covalently bonded, where the Rs are identical or different and denote a hydrogen atom or a monovalent hydrocarbon radical having 1 to 20 carbon atoms per radical, or two radicals R together denote a divalent hydrocarbon radical having 4 to 11 carbon atoms, which is optionally interrupted by a hetero atom,
R¹ denotes a divalent hydrocarbon radical having 1 to 20 carbon atoms per radical and
X⁻ denotes a chloride ion, bromide ion or iodide ion.

## Revendications

1. Procédé de préparation de diméthychlorosilane par comproportionnement de diméthyldichlorosilane avec au moins un silane ayant des groupes méthyle liés à Si, des atomes d'hydrogène et/ou des atomes de chlore en présence d'un catalyseur, caractérisé en ce que l'on utilise en tant que silane, du méthylchlorosilane et/ou du méthylsilane et, en tant que catalyseur, un support insoluble dans le milieu réactionnel et auquel sont liés des groupes NR₂R¹ ou ⁻X⁺NR₃R¹ par covalence, où R est identique ou différent, représente un atome d'hydrogène ou un radical hydrocarboné monovalent ayant de 1 à 20 atomes de carbone par radical ou des radicaux R représentent conjointement un radical hydrocarboné divalent ayant de 4 à 11 atomes de carbone, qui est éventuellement interrompu par un hétéroatome,
R¹ représente un radical hydrocarboné bivalent ayant de 1 à 20 atomes de carbone par radical et
X⁻ représente un ion chlorure, un ion bromure ou un ion iodure.

2. Procédé selon la revendication 1, caractérisé en ce que l'on utilise en tant que méthylchlorosilane et/ou méthylsilane, les produits de dismutation du méthyldichlorosilane, qui sont obtenus par dismutation du méthyldichlorosilane en présence d'un support insoluble dans le milieu réactionnel, auquel sont liés des groupes NR₂R¹ ou des groupes ⁻X⁺NR₃R¹ par covalence, où R est identique ou différent, représente un atome d'hydrogène ou un radical hydrocarboné monovalent ayant de 1 à 20 atomes de carbone par radical ou deux radicaux R représentent conjointement un radical hydrocarboné bivalent ayant de 4 à 11 atomes de carbone, qui est éventuellement interrompu par un hétéroatome,
R¹ représente un radical hydrocarboné bivalent ayant de 1 à 20 atomes de carbone par radical et
X⁻ représente un ion chlorure, un ion bromure, ou un ion iodure.
